# EUROPEAN PATENT APPLICATION

(11) **EP 1 622 344 A2**
(43) Date of publication of application: **01.02.2006**
(21) Application number: 05002426.4
(22) Date of filing: 04.02.2005
(51) Int. Cl.: H04M 1/57, H04M 1/725

(54) **Apparatus and method for managing scheduling information in a mobile communication terminal**

(30) Priority: 27.07.2004 KR 2004058744
(71) Applicant: SAMSUNG ELECTRONICS CO., LTD., Suwon-si, Gyeonggi-do (KR)
(72) Inventor: Jung, Ho-Won c/o Samsung Electronics Co., Ltd., Suwon-si Gyeonggi-do (KR); Park, Jee-Hoon c/o Samsung Electronics Co., Ltd., Suwon-si Gyeonggi-do (KR)
(74) Representative: Grünecker, Kinkeldey, Stockmair & Schwanhäusser Anwaltssozietät

(57) **Abstract**

Disclosed herein is an apparatus and method for managing schedule information in a mobile communication terminal that implements a schedule management function allowing a user to include a variety of information associated with a call signal (i.e. call history information) or transmission/reception messages generated by an SMS, EMS, MMS type message within schedule information, and is to store/manage the schedule information including the call history information and the transmission/reception messages. A schedule information encoder is provided for encoding call history information and transmission/reception messages stored in different formats in a single schedule information format.

## Description

The present invention relates to an apparatus and method for managing scheduling information in a mobile communication terminal, and more particularly to an apparatus and method for managing scheduling information in a mobile communication terminal in order to include specific information (e.g. call history information, message information, etc.) in the scheduling information, and manage the scheduling information with the specific information.

A variety of mobile service functions (e.g. a call history record function, a message transmission/reception function, a wireless Internet function, an alarm function, and a schedule management function, etc.) have been recently added to mobile terminals (e.g. PCS phones, IMT-2000 phones, PDA phones, etc.) to provide users with voice communication functions.

Particularly, the schedule management function can be implemented on the condition that predetermined personal information management software having a PIM (Personal Information Manager) function, which has been used to provide conventional electronic notes on PDAs, etc., is installed in the mobile terminals. In more detail, a user executes the PIM function by selecting a desired menu from a plurality of menus, and enters, edits, and stores a variety of schedule information when the PIM function has been executed, and reads the stored information, to allow the user to acquire desired data.

However, in the case of the aforementioned mobile terminals, the user must use a keypad comprised of a plurality of small buttons to enter his or her desired data, which is inconvenient to the user. Also, such mobile terminals are limited in display size and function, making it difficult for the user to enter/edit desired schedule information.

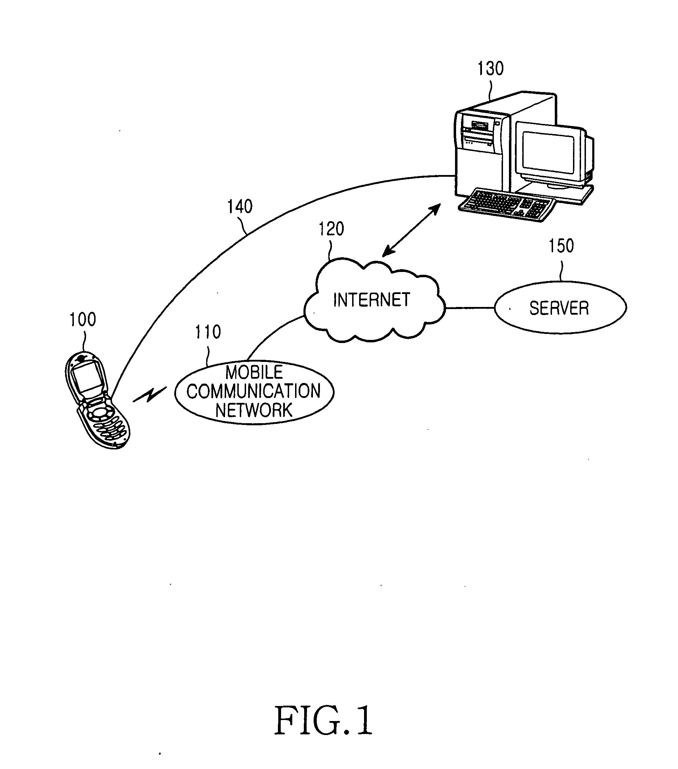

Data synchronization technology between a computer and a mobile communication terminal has been proposed to solve the aforementioned problem. The data synchronization technology between the mobile communication terminal (hereinafter referred to as a mobile terminal) and a server will hereinafter be described with reference to Fig. 1.

Referring to Fig. 1, a mobile terminal 100 is connected to the Internet 120 over a mobile communication network 110. A computer 130 connected to the Internet 120 transmits scheduling information provided by a user to the mobile terminal 100 over the mobile communication network 110. The computer 130 supports a schedule management program by which scheduling information (i.e. a schedule title, and schedule contents, etc.) can be edited. Therefore, schedule information synchronization between the mobile terminal 100 and the computer 130 can be established.

In accordance with another synchronization method, a program capable of recognizing information stored in the mobile terminal 100 is installed in the computer 130, the mobile terminal 100 is connected to the computer 130 via the cable 140, and information stored in the mobile terminal 100 or in the computer 130 can be shared by synchronizing between the mobile terminal 100 and the computer 130. Therefore, a user interconnects the mobile terminal 100 and the computer 130 via the cable 140, executes a predetermined schedule management program such as Microsoft Outlook installed in the computer 130, and performs update operations, i.e. operations for entering/editing schedule information, during execution of the predetermined schedule management program, such that the updated schedule information is transmitted to the mobile terminal 100 via the cable 140. Therefore, the user can view schedule information of the MS Outlook stored in a DB (DataBase) of the computer 130 on his or her mobile terminal.

In the meantime, a message transmission/reception function indicative of one of the aforementioned functions is adapted to transmit a counterpart phone number and message between mobile terminals. The message transmission/reception services are classified into an SMS (Short Message Service) for transmitting weather forecast, news, and stock information as well as common messages in the form of an SMS message, an EMS (Enhanced Message Service) for transmitting E-mail via Internet communication, and an MMS (Multimedia Message Service) for transmitting moving image files, pictures, etc.

A call history record function indicative of another aforementioned function provides a user with a call connection time, a communication time, and call history information received in the user's absence.

In conventional mobile communication terminals, the schedule management function, the message transmission/reception function, and the call history record function operate independent of each other, and information corresponding to individual functions is configured in different formats according to prescribed regulations, and is then stored in a predetermined memory.

As stated above, the conventional mobile communication terminal stores the schedule management function, the message transmission/reception function, and the call history record function in different formats, such that a user is unable to edit schedule information even though a user wishes to insert the call history information in the schedule information.

For example, if the user desires to recall past events using the schedule management function, the user needs to recall what he or she did and with whom, or needs to recall who they previously talked with. However, unless the user enters telephone conversation contents in a prescribed schedule directory, the conventional mobile communication terminal has a disadvantage in that it unavoidably deletes such information with the call history information.

Therefore, the present invention has been made in view of the above problems.

It is the object of the present invention to provide an apparatus and method for managing schedule information for easily including personal information associated with a call history record function and a message transmission/reception function in a schedule management function.

This object is solved by the subject matter of the independent claims.

Preferred embodiments are defined in the dependent claims.

In accordance with one aspect of the present invention, the above and other objects can be accomplished by the provision of an apparatus for managing schedule information of a mobile communication terminal that includes a memory for storing first schedule information entered by a user and a controller for encoding communication history information generated by transmission/reception of a communication signal so as to be interoperable with the first schedule information, generating second schedule information, storing the second schedule information in the memory, and managing integrated schedule information.

In accordance with another aspect of the present invention, there is provided a method for managing schedule information of a mobile communication terminal that includes the steps of storing first schedule information entered by a user; storing communication history information generated by transmission/reception of a communication signal; encoding the communication history information to be interoperable with the first schedule information, and generating second schedule information; and including the second schedule information in the first schedule information, and managing integrated schedule information.

The above object and other aspects, features and other advantages of the present invention will be more clearly understood from the following detailed description taken in conjunction with the accompanying drawings, in which:
Fig. 1 is a conceptual diagram illustrating a conventional synchronization method between a conventional mobile communication terminal and a server;
Fig. 2 is a block diagram illustrating a mobile communication terminal for performing the schedule management function in accordance with a preferred embodiment of the present invention;
Fig. 3 is a detailed block diagram illustrating a controller and a memory in accordance with a preferred embodiment of the present invention;
Fig. 4 is a flow chart illustrating a method for automatically generating schedule information when a call connection state is severed in accordance with a preferred embodiment of the present invention;
Fig. 5 is a flow chart illustrating a method for generating schedule information associated with a selected user when a call connection state is severed in accordance with another preferred embodiment of the present invention;
Fig. 6 is a flow chart illustrating a method for automatically generating schedule information during a message transmission/reception time in accordance with yet another preferred embodiment of the present invention;
Fig. 7 is a diagram illustrating a method for encoding call history information according to the schedule information format in accordance with a preferred embodiment of the present invention; and
Fig. 8 is a view illustrating a daily program management screen image including call history information and messages in accordance with a preferred embodiment of the present invention.

Now, preferred embodiments of the present invention will be described in detail with reference to the annexed drawings. In the drawings, the same or similar elements are denoted by the same reference numerals even though they are depicted in different drawings. In the following description, a detailed description of known functions and configurations incorporated herein will be omitted to avoid making the subject matter of the present invention unclear.

The present invention implements a schedule management function. The schedule management function includes a variety of information, e.g. call history information, as well as transmission/reception messages using SMS, EMS, and MMS services in schedule information. The schedule management function stores the schedule information including the variety of information, and manages the stored information. For this operation, the present invention includes a schedule information encoder for encoding call history information and transmission/reception messages, which conventional terminals store in different formats, using only one schedule information format.

In more detail, the present invention controls schedule information entered by the user in a manner that is interoperable with call history information and transmission/reception messages, such that the schedule information, the call history information, and the transmission/reception messages can be managed as integrated schedule information. Therefore, the user can configure the schedule information according to his or her interests. The schedule encoding operation of the present invention may be performed by a user's entry command received from a popup window, or may also be automatically performed when the call history information is stored or a message storage operation is completed.

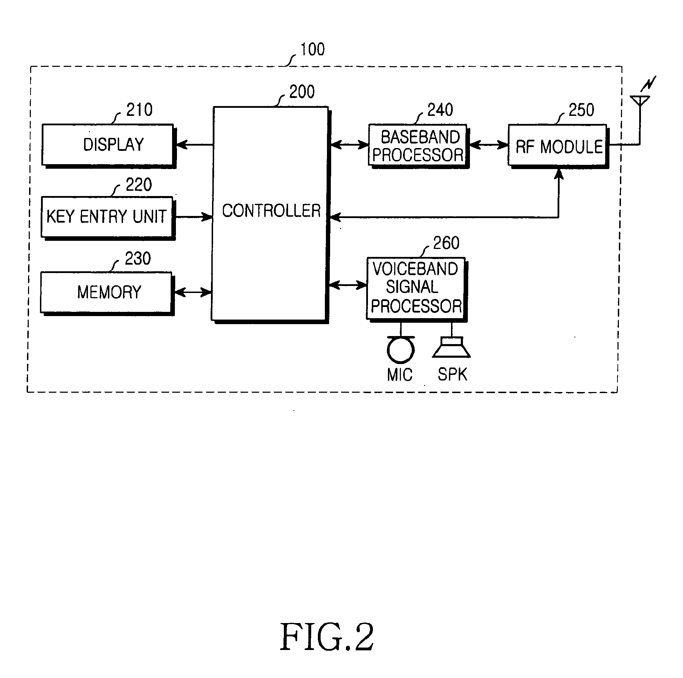

The schedule management function implemented in the mobile terminal 100 will hereinafter be described with reference to Fig. 2. Fig. 2 is a block diagram illustrating a mobile communication terminal for performing the schedule management function in accordance with a preferred embodiment of the present invention.

Referring to Fig. 2, a controller 200 performs wireless communication and data processing functions of the mobile terminal 100 so that it provides overall control operation of the mobile terminal 100. The communication history information generated when a communication signal is transmitted or received is encoded to be interoperable with schedule information entered by a user, such that it generates new schedule information, updates data of a memory 230 using the schedule information, and stores the updated data, such that it manages integrated schedule information.

In more detail, the controller 200 controls the individual components shown in Fig. 2, such that the components encode communication history information in a predetermined format associated with the schedule management function, and include the encoded result in the schedule information, such that they manage the final result as integrated schedule information. In this case, the communication history information may be indicative of either call history information or transmission/reception messages. In more detail, the call history information can indicate information generated by call origination/termination operations, and can include one of a call connection time, a call termination time, communication records received in the user's absence, an incoming call number, address directory information of the incoming call number, and incoming/outgoing call location or position information (e.g. in the case of a mobile terminal having a positioning function). The transmission/reception messages are indicative of messages transmitted or received using one of Short Message Service (SMS), Enhanced Message Service (EMS), and Multimedia Message Service (MMS).

The display 210 receives display data associated with key entry data received from the key entry unit 220 upon receiving a control signal from the controller 200, and displays the received data. Otherwise, the display 210 displays operation states and various information of the mobile terminal 100, typically in the form of icons or characters. The display 210 enables the user to establish or operate his or her necessary functions upon receiving a control signal from the controller 200, such that its state information can be visually recognized by the user. The key entry unit 220 includes a variety of keys including number keys, and transmits key entry data entered by the user to the controller 200. In more detail, the key entry unit 220 outputs unique key entry data corresponding to individual keys pressed by the user. The key entry data generated from the key entry unit 220 is supplied to the controller 200, and the relationship between individual unique key entry data units and output data units is also transmitted to the controller 200, such that the controller 200 performs corresponding operations according to the key entry data contents.

The memory 230 connected to the controller 200 typically includes a ROM (Read Only Memory), a RAM (Random Access Memory), and a voice memory which are adapted to store programs and information required for controlling operations of the mobile terminal 100, etc. In accordance with a preferred embodiment of the present invention, the memory 230 contained in the mobile terminal 100 continuously updates and stores schedule information according to call history information and messages upon receiving a control signal from the controller 200.

The RF (Radio Frequency) module 250 transmits or receives RF signals to/from a Base Station (BS) via an antenna. The RF module 250 converts received RF signals into IF (Intermediate Frequency) signals, transmits the IF signals to the baseband processor 240, converts the IF signals received from the baseband processor 240 into RF signals, and transmits the converted RF signals. In this case, the baseband processor 240 is configured in the form of a BAA (Baseband Analog ASIC) for providing an interface between the controller 200 and the RF module 250. The baseband processor 240 converts baseband digital signals received from the controller 200 into analog IF signals, transmits the analog IF signals to the RF module 250, converts the analog IF signals received from the RF module 250 into the baseband digital signals, and transmits the resultant baseband digital signals to the controller 200. The voiceband signal processor 260 connected to the controller 200 is connected to a microphone MIC and a speaker SPK, configures voice signals received from the microphone MIC in the form of data during a call connection mode, and outputs the data-format voice signals to the controller 200, converts voice data received from the controller 200 into audible signals, and outputs resultant audible signals.

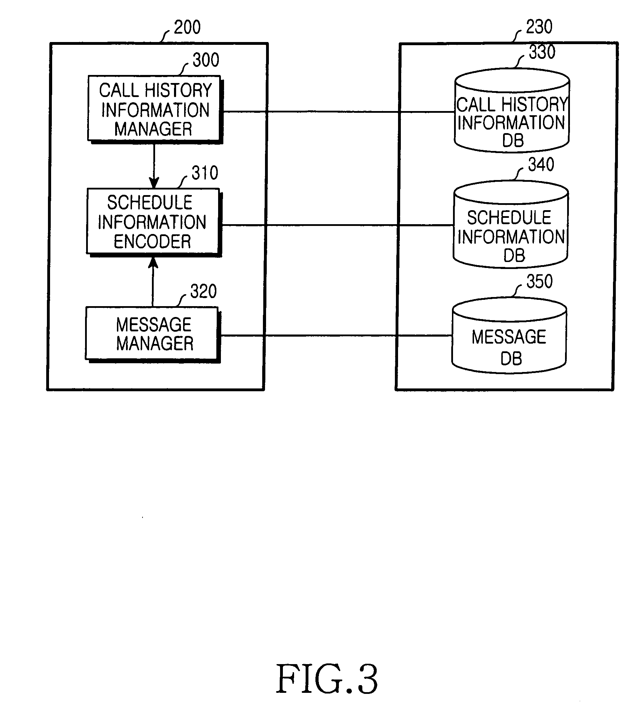

Operation of the controller 200 and the memory 230 will hereinafter be described with reference to Fig. 3. Fig. 3 is a detailed block diagram illustrating the controller and the memory in accordance with a preferred embodiment of the present invention.

Referring to Fig. 3, the controller 200 includes a call history information manager 300, a schedule information encoder 310, and a message manager 320. The call history information manager 300 is connected to the call history information DB (DataBase) 330, and stores/manages call history information. In this case, the call history information includes a variety of information, for example, a call connection time, a call termination time, communication records received in the user's absence, an incoming call number, address directory information of the incoming call number, and location or position information of an incoming/outgoing call (e.g. when a mobile terminal has a positioning function).

The message manager 320 is connected to the message DB 350, and stores/manages transmission/reception messages of the mobile terminal 100. Preferably, messages stored in the message DB 350 can include messages transmitted/received using SMS, EMS, and MMS services, which for example can include transmission/reception messages between companions, weather forecast messages, news messages, stock information messages, E-mail messages, and moving image files and pictures, etc. Each of the call history information DB 330 and the message DB 350 is generally implemented in a predetermined memory area of the memory 230.

The schedule information encoder 310 is connected to the schedule information DB 340 corresponding to a predetermined memory area of the memory 230, executes a predetermined schedule management program, and manages schedule information of the mobile terminal 100. In other words, the schedule information encoder 310 encodes call history information and messages in a predetermined format, such that it can include the call history information and messages along with general schedule management program functions (e.g. schedule information entry, edit, storage, and correction functions) in the schedule information, resulting in the creation of new schedule information. The generated schedule information is stored in the schedule information DB 340. The schedule information encoder 310 reads the stored schedule information upon receipt of a user request, and displays the read schedule information on the display 210 to provide necessary schedule information to the user.

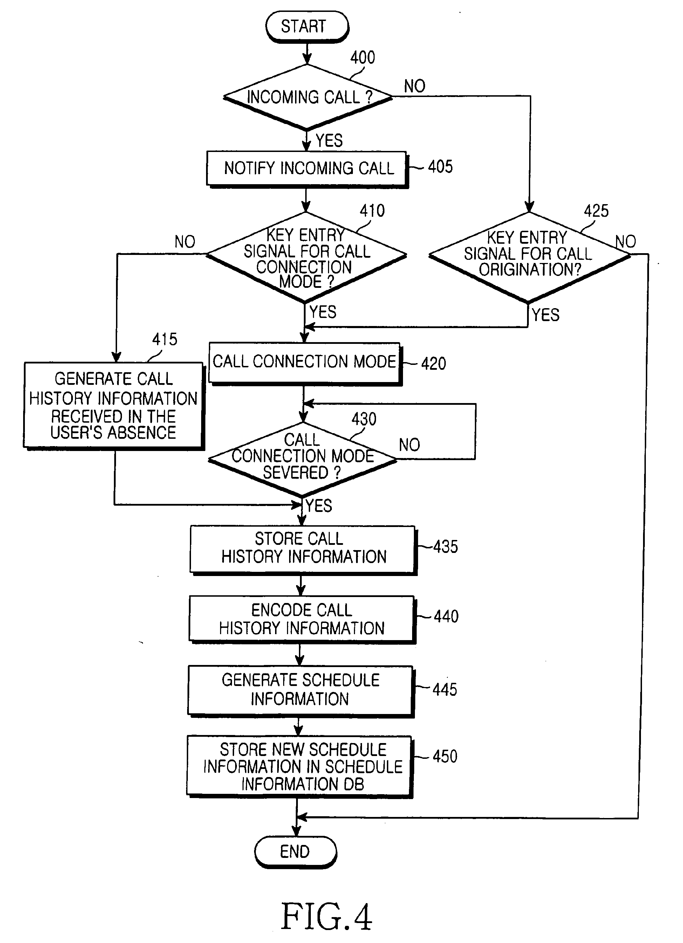

A method for generating the schedule information in the controller 200 will hereinafter be described with reference to Fig. 4. Fig. 4 is a flow chart illustrating a method for automatically generating schedule information when a call connection state is severed, i.e. terminated, in accordance with a preferred embodiment of the present invention.

Referring to Fig. 4, the controller 200 determines whether an incoming call signal is received from the Base Station (BS) via an antenna of the RF module 250 at step 400. If it is determined that the incoming call signal has been received from the BS, the controller 200 outputs a ringtone, enters a vibration mode, or blinks an LED (Light Emitting Diode) of the mobile terminal at step 405, such that the user can recognize the presence of the incoming call. If the presence of the incoming call is recognized by the user, the controller 200 determines whether there is a key entry signal for establishing a call connection mode at step 410.

If the user selects a call connection button, the controller 200 performs a prescribed function according to the selected call connection button at step 420, and determines whether the call connection mode is terminated at step 430. Otherwise, if a key entry signal for establishing the call connection mode is not received at step 410, the controller 200 determines whether there is a call connection failure. Therefore, the controller 200 generates information generated by the call connection failure, i.e. call history information received in the user's absence, at step 415, and stores the call history information at step 435. In other words, the call history information manager 300 contained in the controller 200 generates call history information in such a way that the call history information can be stored in the call history information DB 330.

In the meantime, if the call connection mode is severed at step 430, the controller 200 generates and stores call history information, which is comprised of a call connection time, a call termination time, an incoming call number, address directory information of the incoming call number, and incoming/outgoing call location or position information (e.g. when a mobile terminal has a positioning function). The controller 200 encodes the call history information according to the schedule information format so as to include the call history information in the schedule information at step 440, and generates new schedule information at step 445. Thereafter, the controller 200 includes the new schedule information in the pre-stored schedule information at step 450, such that it updates the schedule information stored in the schedule information DB 340.

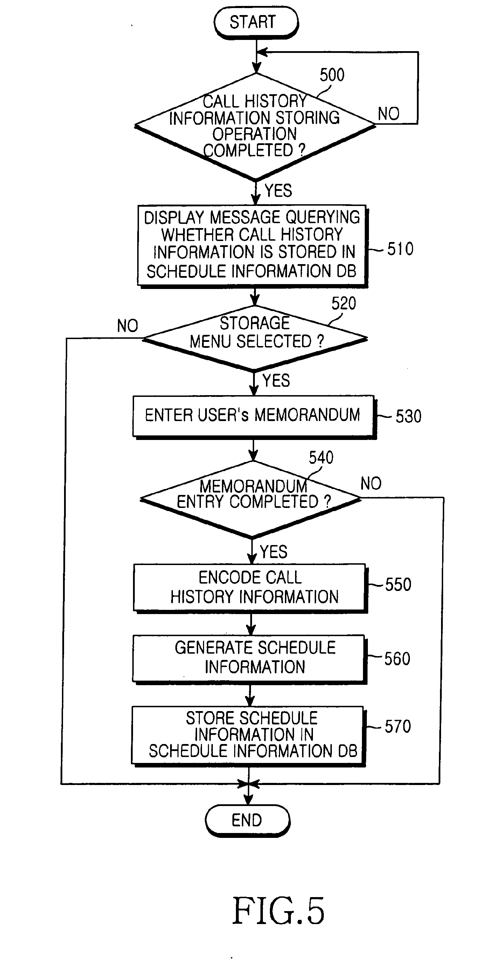

A method for generating schedule information upon receipt of a user request when the call connection mode is severed according to another preferred embodiment of the present invention will hereinafter be described with reference to Fig. 5.

Referring to Fig. 5, the controller 200 determines whether the call history information storage operation is completed at the same time the call connection mode is severed at step 500. In this case, the steps prior to the call termination time are similar to steps 400∼435 of Fig. 4.

If the call history information has been stored at step 500, the controller 200 displays a message querying whether the call history information should be stored in the schedule information DB 340, typically in the form of a popup window, at step 510. In other words, in order to include the call history information in the schedule information and to manage the schedule information including the call history information, the controller 200 queries the user about whether the call history information should be stored.

The controller 200 determines whether the user selects a storage menu at step 520. If the user selects the storage menu at step 520, the controller 200 goes to step 530, such that it receives user memorandum contents from the user in order to allow the user to note desired memorandum contents using the call history information storage menu at step 530.

Thereafter, the controller 200 determines whether the user has entered memorandum contents at step 540. If it is determined that the user has entered memorandum contents at step 540, the controller 200 encodes the call history information along with the received memorandum contents at step 550. In this case, the call history information encoding operation is performed by the schedule information encoder 310 contained in the controller 200. The encoding operation performed by the schedule information encoder 310 means that the differently formatted call history information is converted to the schedule information format. Therefore, the controller 200 performs the call history information encoding process at step 550, such that it generates the schedule information suitable for the schedule format at step 560. Thereafter, the controller 200 provides the schedule information DB 340 with the generated schedule information at step 570, such that it updates the pre-stored schedule information.

Examples of the aforementioned operations will hereinafter be described. In accordance with the present invention, the call history information generated at the same time the call connection mode is severed can be automatically included and recorded in the schedule information, or can also be included and recorded in the schedule information by a user command.

The call history information generated at a call termination time is indicative of information for a communication or conversation function, and includes a call connection time, a call termination time, a call duration time, a counterpart phone number, address directory information of the counterpart phone number, and incoming/outgoing call location or position information (e.g. when the a mobile terminal has a positioning function). Also, the call history information may include information received in the user's absence (i.e. an incoming call time received when the user is not available), an outgoing call number, and user information of the outgoing call number, etc.

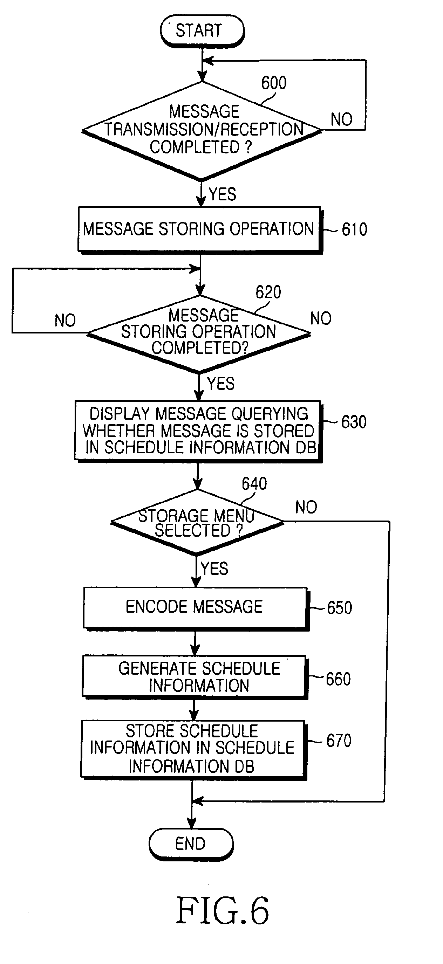

The aforementioned process can also be applied when transmission/reception messages using the SMS, EMS, and MMS are included in the schedule information and are then managed. Therefore, the transmission/reception messages other than the call history information are interoperable with the schedule information according to yet another preferred embodiment of the present invention, such that they can be included in the schedule information. A method for including the transmission/reception messages in the schedule information, and storing the same will hereinafter be described with reference to Fig. 6. Fig. 6 is a flow chart illustrating a method for automatically generating schedule information during message transmission/reception in accordance with yet another preferred embodiment of the present invention.

The controller 200 determines whether the message transmission or reception has been completed at step 600. If it is determined that the message transmission or reception has been completed, the controller 200 performs a predetermined operation corresponding to a general message storage function at step 610. The controller 200 determines whether the transmission/reception messages have been stored in the message DB 350 at step 620. If it is determined that the transmission/reception messages have been stored in the message DB 350, the controller 200 displays a message querying whether the messages have been stored in the schedule information DB 340, preferably in the form of a popup window, at step 630.

If a user selection signal is generated in response to the querying message at step 640, the controller 200 encodes the transmission/reception messages stored in the message DB 350 at step 650. In other words, when the message transmission/reception is completed, the transmission or reception message is stored in the message DB 350. If a selection signal is generated by the user, who desires to include the transmission/reception message in the schedule information and to store the schedule information including the transmission/reception message, the controller 200 performs the encoding process for converting the transmission/reception message according to the schedule information format. In this case, the encoding process is performed by the schedule information encoder 310 implemented in the controller 200.

If the encoding process has been performed at step 650, the controller generates new schedule information converted according to the schedule information format at step 660. Thereafter, the controller 200 provides the schedule information DB 340 with the generated schedule information at step 670, such that it updates the pre-stored schedule information.

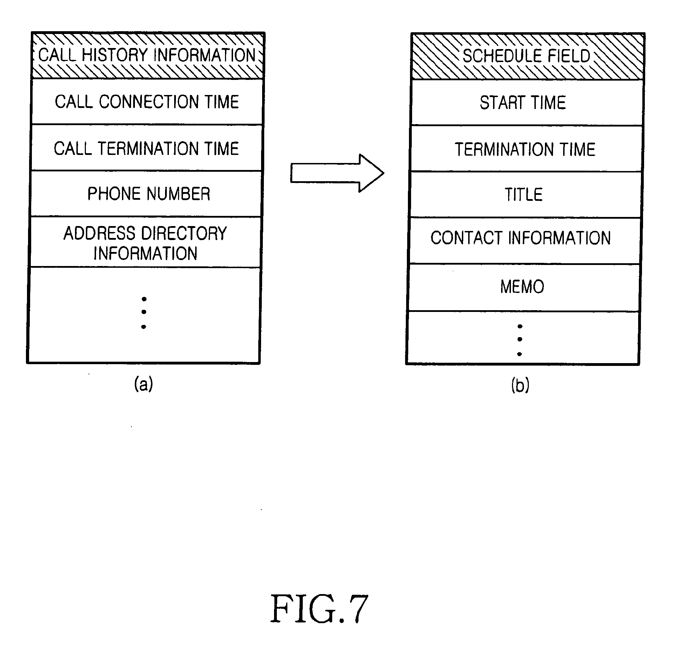

A method for encoding the call history information according to the schedule information format will hereinafter be described with reference to Fig. 7. Referring to Fig. 7, the call history information is stored in the format of Fig. 7a, and the format of the call history information is converted into the format of Fig. 7b through the encoding process, such that the converted result is stored in the form of schedule information.

In more detail, the call history information, e.g. a call connection time, a call termination time, a phone number, address directory information, and incoming/outgoing call location or position information, is encoded such that it is stored in individual fields associated with schedule formats. Therefore, the call history information is interoperable with the schedule information, such that it can be continuously updated along with a variety of information.

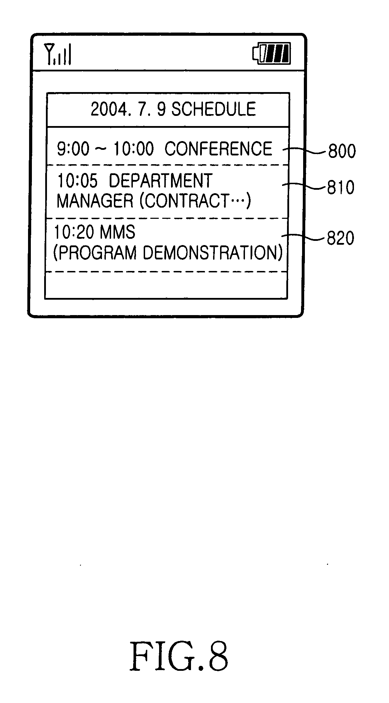

For example, if the user selects a specific menu corresponding to a schedule management function, user-entry schedule data 800, schedule data 810 including history information, and other schedule data 820 including messages received via an MMS, etc., may be displayed on only one schedule management screen image, as shown in Fig. 8.

As apparent from the above description, with the widespread of mobile communication terminals, the present invention controls a common schedule management function to be interoperable with call history information and transmission/reception messages so as to meet various desires of the user, such that the call history information and the transmission/reception messages can be stored and managed in association with the communication schedule management function, resulting in greater convenience of the user.

Although preferred embodiments of the present invention have been disclosed for illustrative purposes, those skilled in the art will appreciate that various modifications, additions and substitutions are possible, without departing from the scope of the invention as disclosed in the accompanying claims.

## Claims

1. An apparatus for managing schedule information of a mobile communication terminal, comprising:
a memory for storing first schedule information entered by a user; and
a controller for encoding communication history information generated by transmission/reception of a communication signal so as to be interoperable with the first schedule information, generating second schedule information, storing the second schedule information in the memory, and managing integrated schedule information.

2. The apparatus according to claim 1, wherein the managing integrated schedule information includes first and second schedule information.

3. The apparatus according to claim 1 or 2, wherein the memory includes:
a call history information database for storing call history information generated by incoming/outgoing calls; and
a message database for storing messages generated by message transmission/reception operations.

4. The apparatus according to claim 3, wherein the memory further includes:
a schedule database for including the call history information and the second schedule information encoded with the messages in the first schedule information, and storing the first schedule information including the call history information and the second schedule information, wherein the memory is interoperable with the first schedule information.

5. The apparatus according to one of claims 1 to 4, wherein the controller includes:
a call history information manager for managing call history information generated by incoming/outgoing calls;
a message manager for managing messages generated by message transmission/reception operations; and
a schedule information encoder for encoding the call history information and the message to be interoperable with the first schedule information, generating new second schedule information, including the second schedule information in the first schedule information.

6. The apparatus according to claim 3, wherein the messages are indicative of messages transmitted/received using one of a short message service, an enhanced message service, and a multimedia message service.

7. The apparatus according to claim 3, wherein the call history information includes one of a call connection time, a call termination time, communication records received in the user's absence, an incoming call number, address directory information of the incoming call number, and location or position information of incoming/outgoing calls.

8. An apparatus for managing schedule information of a mobile communication terminal, comprising:
a call history information manager for managing call history information generated by incoming/outgoing calls;
a call history information database connected to the call history information manager for storing the call history information; and
a schedule information encoder for encoding the call history information stored in the call history information database in the form of a schedule information format so that the call history information can be interoperable with schedule information.

9. The apparatus according to claim 8, further comprising:
a message manager for managing messages generated by message transmission/reception operations; and
a message database connected to the message manager for storing the messages.

10. The apparatus according to claim 9, wherein the message stored in the message database is encoded in the schedule information format by the schedule information encoder so that the messages can be interoperable with the schedule information.

11. A method for managing schedule information of a mobile communication terminal, comprising:
storing first schedule information entered by a user;
storing communication history information generated by transmission/reception of a communication signal;
encoding the communication history information to be interoperable with the first schedule information, and generating second schedule information; and
including the second schedule information in the first schedule information, and managing integrated schedule information.

12. The method according to claim 11, wherein the managing integrated schedule information includes first and second schedule information.

13. The method according to claim 11 or 12, wherein the step of storing the communication history information includes:
storing call history information generated by incoming/outgoing calls; and
storing messages generated by message transmission/reception operations.

14. The method according to claim 13, wherein the messages are indicative of messages transmitted/received using one of a short message service, an enhanced message service, and a multimedia message service.

15. The method according to claim 13, wherein the call history information includes one of a call connection time, a call termination time, communication records received in the user's absence, an incoming call number, address directory information of the incoming call number, and location or position information of incoming/outgoing calls.
